# EUROPEAN PATENT APPLICATION

(11) **EP 1 418 194 A1**
(43) Date of publication of application: **12.05.2004**
(21) Application number: 02753224.1
(22) Date of filing: 02.08.2002
(51) Int. Cl.: C08G 73/04, B01D 21/01, C02F 1/56, C02F 11/14, D21H 21/02, D21H 17/56

(54) **MODIFIED POLYALKYLENEIMINE AND METHODS OF USING THE SAME**

(30) Priority: 10.08.2001 JP 2001243874; 13.08.2001 JP 2001245393; 31.08.2001 JP 2001262542; 21.12.2001 JP 2001388924; 26.03.2002 JP 2002086044
(71) Applicant: HYMO CORPORATION, Shinagawa-ku, Tokyo 141-0031 (JP)
(72) Inventor: ISHIZAKI, Takako, HYMO CORPORATION, Tokyo 141-0031 (JP); NAKASHIN, Kazuhiro, HYMO CORPORATION, Tokyo 141-0031 (JP); WAKAMATSU, Hideyuki, HYMO CORPORATION, Tokyo 141-0031 (JP); SAKAI, Kenji, HYMO CORPORATION, Tokyo 141-0031 (JP); ODAKA, Emiko, HYMO CORPORATION, Tokyo 141-0031 (JP)
(74) Representative: Jenkins, Peter David
(86) International application number: PCT/JP2002/007915
(87) International publication number: WO 2003/016379

(57) **Abstract**

A modified polyalkyleneimine with satisfactory stability obtained by modifying a polyalkyleneimine through a reaction which is easy to control and does not lower the cation density characteristic of the polyalkyleneimine; and various methods of treatment with the modified polyalkyleneimine. A polyalkyleneimine or a mixture thereof with a polyamine is reacted with a polycationic substrance having a specific structure to produce a modified polyalkyleneimine having a specific structure. The modified polyalkyleneimine can be used as a sludge dehydrator, agent for improving suitability for dehydrating filtration, agent for pretreatment of paper stock, or yield improver to thereby enable an efficient treatment.

## Description

### Technical Field

The present invention relates generally to modified polyalkyleneimines and more particularly to modified polyalkyleneimines, which are prepared by reaction of polyalkyleneimines or mixtures thereof with polyamines with polycationic substance having a specific structure and further to a diversity of chemical treatments where the modified polyalkyleneimines are used for treating agents.

### Background Art

The polyethyleneimine, because of rich in reactivity and high in cation density, has been used in a wide range of applications including aqueous waste-treating agents, chelating agents, fiber-treating agents, oxygen-fixing agents, and so on. As the polyethyleneimines are tough to be polymerized into any polymers of very large molecular weight, nevertheless, many considerations have been given to bonding together or cross-linking polyethyleneimine molecules to make the high-molecular-weight compounds. It has been conventionally known that molecules of polyethyleneimine are cross-linked by epichlorohydrin into polymeric compounds of macromolecules. Moreover, there is a prior art, for example disclosed in Japanese Patent Laid-Open No. 162682/1983 in which the polyethyleneimine first reacts with monoepoxy compound, followed by reacting with polyepoxy compound.

A process for cross-linking successively with the epichlorohydrin, however, is very tough to control the reaction. Besides, the resultant product would be poor in stable conservation and also reduced in cation density featuring the polyethyleneimines. Accordingly, it is a primary object to develop a process for modifying polyalkyleneimines to make the linking reaction easy to control and the resultant product better in stable conservation thereof.

### Disclosure of the Invention

Observations to overcome the problems stated earlier have resulted in the present inventions stated later in detail. According to the invention defined in claim 1 in the present application, modified polyalkyleneimines are provided, which have a repeating unit of chemical structure having any one of the general formula (1) and (2) 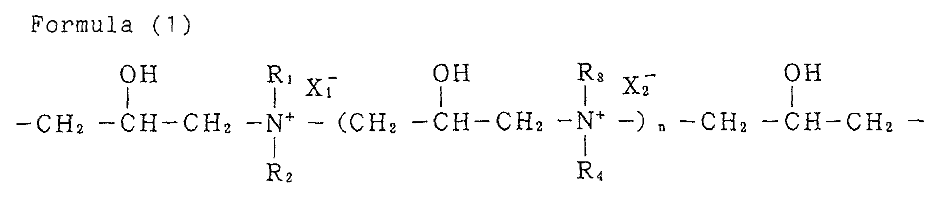 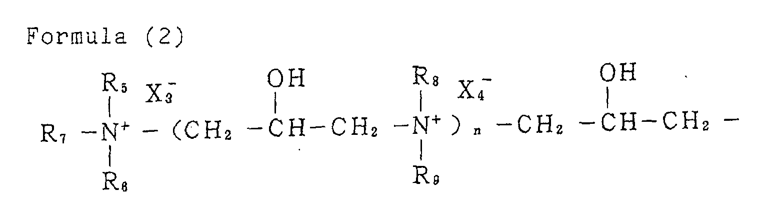 in both the formula (1) and (2), n denotes an integer of 0 to 20; R₁ to R₉ represent any one selected from hydrogen, alkyl groups, hydroxyalkyl groups and bensyl groups having carbon atoms of 1 to 3; and X₁ to X₄ are a negative ion.

According to another invention defined in claim 2 in the present application, the modified polyalkyleneimines of claim 1 are provided, which are prepared by reaction of any one of polyalkyleneimines and a mixture thereof with polyamines with any one of polycationic substances of formula (3) and (4) 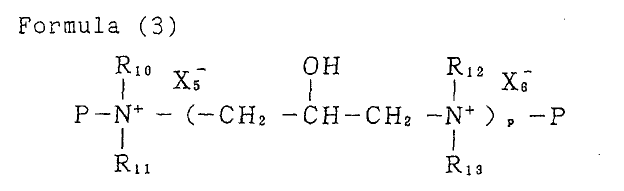 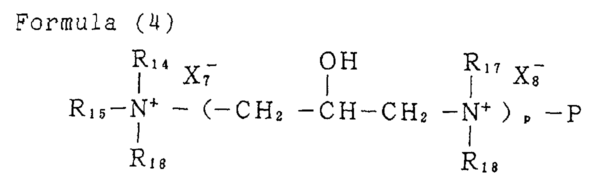 in both the formula (3) and (4), P denotes epoxy groups or halohydrin groups; p is an integer of 0 to 20; R₁₀ to R₁₈ are selected from hydrogen, alkyl, hydroxyl, and benzyl groups having carbon atoms of 1 to 3; and X₅ to X₈ are a negative ion.

According to another invention defined in claim 3 in the present application, the modified polyalkyleneimines of any one of claims 1 and 2 are provided, which are prepared by cross-linking with the polycationic substance of the general formula (3) recited earlier.

According to another invention defined in claim 4 in the present application, the modified polyalkyleneimines of any one of claims 1 to 3 are provided, in which the polycationic substance of the general formula (3) and/or (4) is a polymer product made by condensation polymerization of epihalohydrins with more than one amines selected from ammonia, aliphatic primary amines, aliphatic secondary amines, and aliphatic tertiary amines.

According to another invention defined in claim 5 in the present application, the modified polyalkyleneimines of any one of claims 1 to 4 are provided, in which the polycationic substance of the general formula (3) and/or (4) is a polymer product made by condensation polymerization of A mols (by mole unit) of epihalohydrins with B mols (by mole unit) of more than one amines selected from ammonia, aliphatic primary amines, aliphatic secondary amines, and aliphatic tertiary amines, wherein the condensation polymerization is carried out under such condition that A/B is kept within a range of from 0.25 to 1.2.

According to another invention defined in claim 6 in the present application, the modified polyalkyleneimines of any one of claims 1 to 5 are provided, in which any one of the polyalkyleneimines and the mixture thereof with the polyamines contains C mols (by mole unit) of amino groups while the polycationic substance of the general formula (3) and/or (4) contains D mols (by mole unit) of halohydrin groups and/or epoxy groups, wherein the reaction is carried out under the condition C/D is kept in the range of from 5 to 300mol%.

According to another invention defined in claim 7 in the present application, the modified polyalkyleneimines of any one of claims 1 to 6 are provided, in which the polyalkyleneimines are polyethyleneimines.

According to a further another invention defined in claim 8 in the present invention, a process for treatment by flocculation is provided in which the modified polyalkyleneimines recited in any one of claims 1 to 7 are added to microbiological sludge or a variety of waste waters.

According to a further another invention defined in claim 9 in the present invention, a process for improving filtration property or freeness is provided in which the modified polyalkyleneimines recited in any one of claims 1 to 7 are added to paper stock preparatory to papermaking.

According to a further another invention defined in claim 10 in the present invention, a process for pretreatment of paper stock is provided in which the modified polyalkyleneimines recited in any one of claims 1 to 7 are added to paper stock preparatory to papermaking.

According to a further another invention defined in claim 11 in the present invention, a process for papermaking is provided in which the paper stock is mainly composed of mechanical pulp and/or waste paper recited in claim 10.

According to a further another invention defined in claim 12 in the present invention, a process for papermaking is provided in which the modified polyalkyleneimines recited in any one of claims 1 to 7 are added, in combination with at least one water-soluble polymer having any one of cationic, amphoteric and anionic properties to the paper stock prior to papermaking to help improve freeness and yield.

According to a further another invention defined in claim 13 in the present invention, a process for papermaking of claim 12, is provided in which the water-soluble polymers are composed of fine particles of high polymers of not more than 100 µm in grain size, which is prepared by dispersion polymerization in a salt solution in the presence of highly molecular dispersant soluble in the salt solution of a monomer mixture containing 0 to 97mol% of nonionic monomers and 3 to 100mol% of anionic monomers of the general formula (5) 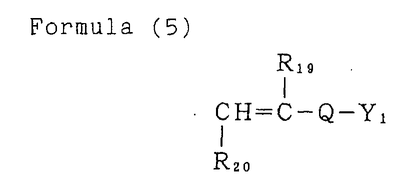 in which R₁₉ denotes hydrogen, methyl groups or carboxymethyl groups; Q is selected from the group consisting of SO₃, C₆H₄SO₃, CONHC(CH₃)₂CH₂SO₃, C₆H₄COO and COO; R₂₀ is hydrogen or COOY₂; and Y₁ or Y₂ is hydrogen or positive ion.

According to a further another invention defined in claim 14 in the present invention, a process for papermaking of claim 12 is provided in which the water-soluble polymers are composed of fine particles of high polymers of not more than 100 µm in grain size, which is prepared by dispersion polymerization in a salt solution in the presence of highly molecular dispersant soluble in the salt solution of a monomer mixture containing 0 to 95mol% of nonionic monomers, 0 to 50mol% of the anionic monomers of the general formula (5) recited above, and 5 to 100mol% of cationic monomers of the general formula (6) and/or (7) 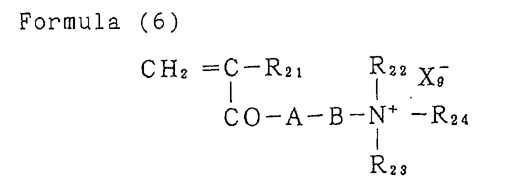 in which R₂₁ denotes hydrogen or methyl groups; R₂₂ and R₂₃ represent alkyl groups or alkoxyl groups having carbon atoms of 1 to 3; R₂₄ is selected from hydrogen, alkyl, alkoxyl, benzyl groups having carbon atoms of 1 to 3, whether the same or different sort; A denotes oxygen or NH; B represents alkylene groups or alkoxylene groups having the carbon atoms of 2 to 4, and X₉ is a negative ion, 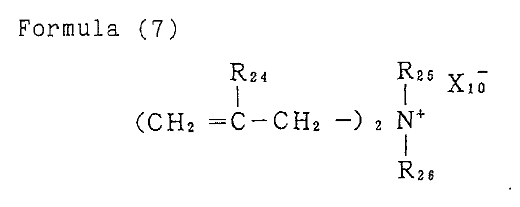 in which R₂₄ denotes hydrogen or methyl groups; R₂₅ and R₂₆ represent any one selected from alkyl, alkoxyl and benzyl groups having carbon atoms of 1 to 3; and X₁₀ is a negative ion.

### Best Mode for Carrying out the Invention

In accordance with the present invention, polyalkyleneimines undergo modification by either cross-linking reaction or graft reaction with specific polycationic substances. The following will discloses in detail the modified polyalkyleneimines and a process for preparing the same.

The polycationic substances to be used for the modification process of the present invention may be prepared by reaction of epihalohydrins with more than one amines selected from ammonia, aliphatic primary, secondary and tertiary amines (referred to just "primary, secondary...amines" hereinafter). Although but the discussion of how the polycationic substances used herein are prepared is beyond the subject matter of the present invention, the preparation of polycationic substances, for example, may be carried out by adding gradually the epihalohydrins into more than one amines selected from ammonia, primary, secondary and tertiary amines. In the embodiments of the present invention, it is recommended to add drop by drop more than one amines selected from ammonia, primary amines, secondary amines and tertiary amines into the epihalohydrins, which are stocked in a reactor vessel preparatory to the reaction.

Molar ratio of more than one amines selected from ammonia, primary amines, secondary amines and tertiary amines to the epihalohydrins for preparation of the polycationic substance employed in the present invention may be determined appropriately depending on the property, structure, molecular weight, and so on of any desired modified polyalkyleneimines, but it typically is in the range of from 0.25 to 1.20. There exists a remnant of the epihalohydrins when the molar ratio of more than one amines selected from ammonia, primary amines, secondary amines and tertiary amines to the epihalohydrins is not more than 0.25. In contrast, even if the molar ratio of more than one amines selected from ammonia, primary amines, secondary amines and tertiary amines to the epihalohydrins were not less than 1.20, there would exist no halohydrin radical at terminal groups in the polycationic substance resulting from the reaction of the epihalohydrins with more than one amines selected from ammonia, primary amines, secondary amines and tertiary amines and therefore no reaction with the polyalkyleneimines or mixtures thereof with polyamines would occur.

Among the polycationic substances suited for the present invention are the substance of the general formula (3) with reactive sites of crosslinking function at both ends and another substance of the general formula (4) with just one reactive site of graft-reaction function at only one end. The former polycationic substance of the general formula (3) with the crosslinking function is formed predominantly with high proportion when the molar ratio of more than one amines selected from ammonia, primary amines, secondary amines and tertiary amines to the epihalohydrins is in the range of roughly from 0.25 to 0.9. In contrast, the latter polycationic substance of the general formula (4) with the graft-reaction function is formed predominantly with high proportion when the molar ratio of more than one amines selected from ammonia, primary amines, secondary amines and tertiary amines to the epihalohydrins is in the range of roughly from 0.8 to 1.2.

There is no limitation in the process for preparing the modified material of the present invention resulting from the reaction of polyalkyleneimines or mixtures thereof with polyamines with polycationic substance of the general formula (3) and/or (4). The modified material, for example, can be prepared by addition of the cationic substance of the general formula (3) and/or (4) to the polyalkyleneimines or mixtures thereof with polyamines. As an alternative, the reaction to yield the modified material may be carried out by addition of the polyalkyleneimines or mixtures thereof with polyamines to the cationic substance of the general formula (3) and/or (4).

No specific restriction is needed in the way to control the reaction. Diluting the polyalkyleneimines or mixtures thereof with polyamines, or the cationic substance of the general formula (3) and/or (4) with ion-exchanged water prior to the reaction, for example, is considered to slow down the rate of reaction. As an alternative, the reactant substances may be diluted while on a reaction to regulate the rate of reaction.

In general, the epihalohydrins are easy to react with any of ammonia, aliphatic primary, secondary and tertiary amines, yielding the polycationic substance. Among such amines are ammonia, aliphatic monovalent amines and aliphatic polyvalent amines. Among the aliphatic monovalent amines are monomethylamine, monoethylamine, dimethylamine, diethylamine, trimethylamine, triethylamine, n-butylamine, isobutylamine, and so on. Among the aliphatic polyvalent amines are ethylenediamine, diethylenetriamine, triethylenetetramine, pentaethylenehexamine, hexamethylenediamine, and so on. Monomethylamine, dimethylamine, trimethylamine, ethylenediamine and pentaethylenehexamine are especially preferable, among the monovalent amines and polyvalent amines recited earlier. Moreover, the polycationic substance of the general formula (4) with just one reactive site at one end is easy to undergo polymerization in the presence of any reactive amines such as 2-hydroxy 3-chloropropyltrimethyl ammonium chloride. The polycationic substance with just one reactive site at one end is also allowed make easily polymerization with the epihalohydrin in the presence of the tertiary amine together with the primary and secondary amines. But the process stated earlier is perceived to be more accessible or beneficial.

Selection of temperature range adopted for the reaction of the epihalohydrins with the amines may be determined appropriately depending on the property, structure, molecular weight, and so on of any desired modified polyalkyleneimines that might be yielded by subsequent modification process. But typically it is in the range of from 10 °C to 90°C, more preferably from 20 °C to 60°C. The reaction temperature of not more than 20°C, because of causing to delay a pace of the reaction, is not generally practical. The reaction temperature of not less than 60 °C gives rise to hydrolysis of the terminal halohydrin or epoxy groups of the polycationic substance, which is formed by the reaction of the epihalohydrin with ammonia, aliphatic monovalent or polyvalent amines. This means that the polycationic substance leads to loss of the reactivity with the polyalkyleneimines or mixtures thereof with polyamines.

Moreover, the temperature range recommended for the reaction of the polycationic substance of the general formula (3) and/or (4) with the polyalkyleneimines or mixtures thereof with polyamines is determined appropriately depending on the property, structure, molecular weight, and so on of any desired modified polyalkyleneimines. But it is typically in the range of from 10°C to 90°C, more preferably from 20°C to 70°C. In addition, the reactivity with the polycationic substances may be increased by the addition of any base catalysis such as sodium hydroxide and the like of not more than 1.0 by molar ratio relative to the epihalohydrin.

The modification reaction is carried out in the range of molar ratios stated later. Now assuming that the polyalkyleneimine or the mixture thereof with polyamines contains the amino groups of C by mole unit while the polycationic substance of the general formula (3) and/or (4) contains the halohydrin groups and/or epoxy groups of D by mole unit, the modification reaction is carried out in the range of C/D=from 5 to 300 (mole percentage). When the polycationic substance, especially, of the formula (3) is prepared with high ratio relative to the polyalkyleneimine even though the polyalkyleneimine is enormously high in molecular weight up to from the tens to the hundreds of thousands, for example, the crosslinking reaction goes way too much to the extreme, where the polyalkyleneimine goes water-insoluble. Thus, the mol% of the cationic substance is typically in the range of from 5 to 50mol%, more preferably from 5 to 30mol%. To the contrary, the polyalkyleneimine of low-molecular weight of from 1,000 to 10,000 allows employing the polycationic substance of typically from 50 to 300mol%, more preferably from 70 to 150mol%.

In terms of a mixing ratio of the polyamine with the polyalkyleneimine there is no specific limitation and the ratio may be selected appropriately depending on the property, structure, molecular weight, and so on of any desired modified polyalkyleneimines, but it is so determined that the amount of polyamine relative to polyalkyleneimine is typically in the range of from 0 to 50% by weight, more preferably from 0 to 30% by weight.

Usable polyalkyleneimine has the molecular weight of from 1,000 to a half of a million. Nevertheless, it may be selected depending on the field where the modified product is availed. Concretely, desiccating agent for sludge, for example, likes higher molecular weight of from three tens of thousands to a half of million. This means the molecular weight after modification is preferably from a ten thousand to five millions. Pretreatment of paper stock, moreover, does not necessarily need a high molecular weight and therefore allows using a molecular weight as little as from a thousand to five tens of thousands. This means the molecular weight after modification is preferably from five thousands to a half of million.
Consequently, the molecular weight after modification is in the range of from five thousands to five millions.

An ionic equivalent value may be determined appropriately depending on the applications where the modified product is availed. Concretely, the pretreatment of fibre stock for paper making, for example, can be carried out at a higher ionic equivalent value, which is preferably in the range of from 12 to 21meq/g by reduced net of the modified product. On the other hand, any agent to increase a yield in the papermaking is desirable to have a low cationic equivalent of preferably from 10 to 18meq/g by reduced net of the modified product. Thus, the ionic equivalent value after modification is determined in the range of from 10 to 21meq/g.

A major feature of the modified polyalkyleneimine according to the present invention resides in getting polyalkyleneimines or polyamines undergoing the crosslinking in part or graft-polymerization with polycationic substance to produce a very large molecule and a three-dimensional network of polymer, thereby increasing any function required in a variety of applications thereof. Another feature of the modified polyalkyleneimine according to the present invention resides in having been successfully raised a cohesive force without taking away any conventional property of the polyalkyleneimines. In general, the polyalkyleneimine has a molecular structure in which a central primary amino group is surrounded by primary, secondary and tertiary amino groups. Thus, when such polyalkyleneimine is used in the applications including agents in waste-water treatment and papermaking, surface coatings, and so on, the cationic dissociation becomes lost in the high pH range. As a result, the polyalkyleneimine at present is restricted in available range in applications thereof. As the polycationic substance of the general formula (3) and/or (4) contains the quarternary amino groups, in contrast, the modification of polyalkyleneimine would come to conduction of the quarternary amino groups into the polyalkyleneimine, thereby helping expand the scope of applications and at the same time give rise to the increase of molecular weight up to the extent that might exploit any new application.

That is to say, the modified polyethyleneimine of the present invention may serve useful functions when used as flocculant for flocculating treatment of the biological sludge and various drainages. For example, the biological sludge is added with the modified polyethyleneimine of the present invention, followed by mixed together to get sludge solids coagulating, which are then dried with the use of any hydroextractor. As an alternative, the modified polyethyleneimine of the present invention may be successfully employed for the flocculating/filtration treatment of waste water originated in food industry, livestock farming, petrochemical industries, steal making and aluminum refining, or the treatment of waste water resulting from a process for making paper pulp in papermaking industry and also the reclamation of any valuable byproduct out of white water originated in papermaking. Added amount of modified polyethyleneimine of the present invention is from 0.05 to 1.0% relative to solids in the sludge, preferably from 0.1 to 0.5%, and also from 0.0001 to 0.1% relative to various other waste waters, preferably from 0.0002 to 0.01%.

The modified polyethyleneimine of the present invention is also allowed to use it as an agent for pretreatment of paper stock. With raising interest on the protection of environment in years, much consideration has been given in various realms of industry to production systems ensuring conservation of natural resources, with less affecting the environment. From the view point of ecological considerations in papermaking industry, much research has focused on the development of mechanical or groundwood pulp making it possible to conserve more chemicals, and the reuse of waste paper. The mechanical pulp, as though uncovering any clue about conservation of chemicals, is limited in quality when formed into a paper sheet just as it is, owing to pitch trouble, low yield, low freeness, and so on which are originated in much chemical compounds derived from logs. To cope with this, much research is turning to water-soluble cationic polymers in efforts to treat anionic substance and resinous substance called pitch, which exist in pulp and waste paper, prior to formation of paper sheets. The polyethyleneimine of the present invention, because of containing the quarternary ammonium groups, is effective over a wide range of pH to treat well the fibre stock. It is advisable to use 0.005 to 0.5000%, preferably 0.01 to 0.1% by weight of polyalkyleneimine, relative to the dry weight of fibre stock.

The modified polyethyleneimine of the present invention is added to the paper stock prior to the formation of paper sheet, thereby improving the freeness of fibre stock. The polyethyleneimines, although having been conventionally applied for agents to improve freeness, have been noted to be vulnerable to variation in pH and high in effervescence. In contrast, the polyethyleneimines of the present invention, since containing quarternary ammonium groups, are resistant to variations in pH and improved in effervescent property. The polyethyleneimines of the present invention is suitable for, especially paperboards too great in paper thickness to dewater them by a dehydrating press. Amount added to the paper stock is in the range of from 0.005 to 0.5000%, preferably from 0.01 to 0.1%, relative to dried paper stock.

It has been further found that the polyethyleneimine of the present invention, when combined with any water-soluble polymers of macromolecular weight, is more effective in improving the yield of pulp and filler. The current paper stock, because of used to be increased in blend of recycled wastepaper and mechanical pulp as stated earlier, becomes more difficult to improve the yield in formation of paper sheet. Moreover, the greater the speed for formation of paper sheet is, the lower the yield becomes. To cope with the problems as stated above, a variety of two-liquid addition processes has been developed. In contrast, the polyethyleneimine of the present invention makes it possible to raise the yield by combination with any amines selected from water-soluble anionic, amphoteric, and cationic substances of macromolecular weight. As for the sequence of additions, it is preferable to first add the polyethyleneimine of the present invention, and then the water-soluble polymer of macromolecular weight. Among the water-soluble anionic polymers of the water-soluble polymers of macromolecular weight are copolymers of nonionic monomer with more than one anionic monomer selected from methacrylic polymer, methacrylic acid, itaconic acid, acrylamide-2-methylpropane sulfonic acid, and so on. The nonionic monomer, for example includes methacrylamide, N,N'-dimethylacrylamide, acrylonitrile, 2-hydroxyle methacrylate, N-vinylpyrrolidone, N-vinylformamide, acryloyl morpholine, and so on, but most preferably acrylamide. Usable examples of the water-soluble amphoteric polymer are cationic acrylic monomer of methacryloyl hydroxyethyl trimethyl ammonium chloride, copolymer of dimethyldianil ammonium chloride with methacrylic acid of the copolymer further added with methacrylamide. The representative examples of water-soluble cationic polymer are the cationic acrylic monomer of methacryloyl hydroxyethyl trimethyl ammonium chloride cited earlier, or copolymer of dimethyldianil ammonium chloride with methacrylamide. The water-soluble polymers stated earlier may be used in any form of aqueous solution, powdery product, emulsion and dispersion, but it is especially preferable to use the polymer product dispersed in saline solution.

The water-soluble polymer of fine powder dispersed in saline solution can be prepared in accordance with, for example Japanese Patent Laid-Open No. 15251/1987. Concretely, the dispersion system of fine powdery polymer at more than 100µm in particle diameter may be prepared with stirring in the presence of polymer soluble in saline solution. The dispersion system, although available for any of nonionic and ionic substances, is more preferable for the ionic polymers. Among the nonionic polymers are perfect amido-compounds of styrene/maleic anhydride copolymer or butane/maleic anhydride copolymer. The ionic polymer available in the present invention includes the copolymer of cationic monomers such as dimethyldianil ammonium chloride, methacryloyl hydroxyethyl trimethyl ammonium chloride, and so on either by themselves or with nonionic monomers.

The water-soluble polymers recited earlier have the molecular weight of a million to twenty millions, preferably five millions to fifteen millions. The amount of addition of the water-soluble polymers is advisable 0.005 to 0.1%, preferably 0.01 to 0.05%. relative to the paper stock. Moreover, the modified polyethyleneimine to be combined with them is 0.005 to 0.1%, preferably 0.01 to 0.05% relative to the paper stock.

Better location where the modified polyalkyleneimine is added or introduced, although either of an outlet to a stuff chest prior to mixing of various paper stocks and a machine chest after the paper stocks have been mixed, has to be determined in conformity with the process employed at the papermaking site. Moreover, any one water-soluble polymer selected for cationic, amphoteric, anionic polymers can be added at either of inlet and outlet sides of a wire screen.

### Examples

While the present invention will be explained in detail with reference to the some examples and comparisons, it is to be noted that the present invention is not to be limited to the following examples, except departing from the spirit and scope of the invention.

### - Synthesis Example 1 -

146.6g of epichlorohydrin and 29.6g of ion-exchanged water were introduced into a four-necked separable flask equipped with thermometer, stirrer and dropping funnel. 123.8g of a 50% by weight aqueous solution of dimethylamine was then added gradually over two hours at 40 to 45°C. The reaction mixture was allowed to stand at 45°C for one hour after the completion of addition of dimethylamine, thereafter added with 29.6g of ion-exchanged water. Colloidal titration exhibited 100.0% reaction of dimethylamine. Neutralization titration of amines exhibited 0.4330% of tertiary amines while gas chromatography showed no amount of residual epichlorohydrin.

### - Synthesis Example 2 -

87.5g of a 54% 3-chloro-2-hydroxypropyl trimethyl ammonium chloride and 44.2g of a 20% aqueous sodium hydroxide solution were poured into a four-necked separable flask equipped with thermometer, stirrer and dropping funnel, and stirred together for 30 minutes, then neutralized with the addition of 8.3g of a 36% hydrochloric acid. There, the resultant mixture was added with 172g of epichlorohydrin, and then added gradually with 167.6g of a 50% by weight aqueous solution of dimethylamine over two hours at 40 to 45°C. The reaction mixture was allowed to stand at 45 °C for one hour after the completion of addition of dimethylamine. The colloidal titration exhibited 100.0% reaction of dimethylamine. The neutralization titration of amines exhibited 0.4330% of tertiary amines while gas chromatography showed 0% of residual epichlorohydrin.

### - Example 1 -

266.7g of a 50% product of polyethyleneimine P-1050, the molecular weight of which is 70,000, was stirred together with 66.7g of ion-exchanged water in a separable flask equipped with thermometer and stirrer. The resultant mixture was added with 9.6g of polycationic substance formed in accordance with the synthetic example 1 recited earlier. After the reaction over four hours at 60°C, 16g of ion-exchanged water was added to adjust the ultimate concentration to 39%.

The gel-permeation chromatography was employed for determining the molecular weight of the resultant product. Moreover, the colloidal titration exhibited a cation equivalent of 18.6meq/g. A viscosity reached was measured at the polymer concentration of 28%.

A viscosity of the aqueous solution was measured using a Brookfield viscometer. A weight average molecular weight was measured using the gel-permeation chromatography, and defined as a molecular weight reduced to polyacrylamide. Columns used here were TOSOH, TSK gel and GMPW. The results calculated excepting the polymers below exclusion limit are illustrated in Table 1.

### - Example 2 -

23.3g of a 100% product of polyethyleneimine SP-200, the molecular weight of which is 10,000, was stirred together with 60.0g of ion-exchanged water in a separable flask equipped with thermometer and stirrer. The resultant mixture was added with 26.9g of polycationic substance formed in accordance with the synthetic example 1 recited earlier. After the reaction over three quarters hour at 28 °C until a rise in viscosity was found in the mixture, 4.5g of a 75% strength sulfuric acid was added to cause the cessation of reaction. Then, 35.31g of ion-exchanged water was added to adjust the ultimate strength to 28%. A weight average molecular weight, viscosity in solution and a cation equivalent were so measured as in Example 1 stated earlier. The results are shown in Table 1.

### - Example 3 -

295.6g of a 50% product of polyethyleneimine P-1050 was stirred together with 73.89g of ion-exchanged water in a separable flask equipped with thermometer and stirrer. The resultant mixture was added with 11.81g of polycationic substance formed in accordance with the synthetic example 1 stated earlier. After the reaction over a half hour at 60 °C , 8g of a 75% strength sulfuric acid was added together with 10.7g of ion-exchanged water to adjust the ultimate strength to 39%. The results are shown in Table 1.

### - Example 4 -

105.9g of a 50% product of polyethyleneimine P-1050 and 2.8g of 100% pentaethylenehexamine were stirred together with 30.64g of ion-exchanged water in a separable flask equipped with thermometer and stirrer. The resultant mixture was added with 4.0g of polycationic substance formed in accordance with the synthetic example 1 stated earlier. After the reaction over six hours at ordinary temperature, 4.5g of a 75% strength sulfuric acid was added together with 2.21g of ion-exchanged water to adjust the ultimate strength to 39%. The results are shown in Table 1.

### - Example 5 -

100g of a 50% product of polyethyleneimine P-1050 were mixed together with 4.0g of polycationic substance formed in accordance with the synthetic example 2 stated earlier in a separable flask equipped with thermometer and stirrer. After the reaction over six hours at ordinary temperature, 4.0g of a 75% strength sulfuric acid was added together with 8.6g of ion-exchanged water to adjust the ultimate strength to 45%. The results are shown in Table 1.

**Table 1**

| Example No. | Polyethyleneimine/ Polycationic Substance (mole ratio) | Cation Equivalent (meq/g) | Viscosity in Solution (mPa · s) | Weight Average Molecular Weight |
|---|---|---|---|---|
| 1 | 1/1.4 | 18.6 | 4200 | 300,000 |
| 2 | 1/1.37 | 15.2 | 8000 | 500,000 |
| 3 | 1/1.57 | 17.5 | 3800 | 300,000 |
| 4 | 1/0.088 | 19.1 | 4600 | 350,000 |
| 5 | 1/0.69 | 18.4 | 3600 | 200,000 |

### - Synthesis Example 3 -

107.7g of ion-exchanged water, 26.8g of ammonium sulfate, 17.9g of sodium sulfate, 32.7g of a 50% acrylic acid, and 90.3g of a 50% acrylamide were introduced into a 500ml four-necked separable flask equipped with stirrer, reflux condenser, thermometer and nitrogen intake pipe. 5.8g of a 50% by weight aqueous solution of sodium hydroxide was added to neutralize 16mol% of acrylic acid. The mixture was then added with 18.9g of a 15% by weight aqueous solution of copolymer, the viscosity of which was 42,600 mPa · s, of methacrylic acid and acrylamide-2-methylpropane sulfonic acid (in which methacrylic acid/acrylamide-2-methylpropane sulfonic acid = 3/7 in molar ratio and 90mol% of acid is neutralized). Thereafter, the reaction mixture while stirred was charged with nitrogen through the nitrogen intake pipe for the removal of dissolved oxygen. During such introduction of nitrogen, the interior temperature was kept at 30°C by a thermostat. After the introduction of nitrogen over a half hour, 0.6g of a 0.1% by weight ammonium peroxodisulfate and 0.6g of a 0.1% aqueous solution of ammonium hydrogensulfite were added in that order to initiate polymerization. On elapse of three hours after the initiation of polymerization, the initiators recited just above were added, the same amount each. After the elapse of further six hours, the initiators were further added, 3.0g each, and the reaction was complete on another fifteen hours later. This product obtained here is referred to an experimental product-1. The molar ratio of acrylic acid to acrylamide in the experimental product-1 was 30 : 70. The viscosity was 200 mPa · s. Observation under the microscope identified that the particle size is in the range of from 5 to 20 µm. The weight average molecular weight measured is shown in Table 2.

### - Synthesis Example 4 -

21.0g (corresponding to 5.0% relative to monomer) of polymer (30% strength aqueous solution, molecular weight of twenty of thousands) of dimethyldianil ammonium chloride, 178.1g of ion-exchanged water, 115.0g of ammonium sulfate, 67.4g of a 50% acrylamide aqueous solution and 115.0g of a 80% aqueous solution of acryloyl hydroxyethyl trimethyl ammonium chloride were introduced into a five-necked separable flask equipped with stirrer, reflux condenser, thermometer and nitrogen intake pipe, and dissolved completely. The mixture, after replacement with nitrogen over a half hour at the interior temperature of 33 to 35 °C , was added with an initiator: 1.3g of 10% strength aqueous solution (corresponding to 0.02% relative to monomer) of 2,2'-azobis[2-(5-methyl-2-imidazoline-2-il)propane] dichloride hydride to cause polymerization. Somewhat increased viscosity in the resulting polymer was observed after two and a half hours elapsed since the initiation of polymerization, but the increased viscosity was disappeared soon afterward and thus the polymer transferred to a dispersed solution. 1.5g of the same initiator as stated earlier was added after the elapse of eight hours since the polymerization began. Afterward the polymerization was made continued over further eight hours. The dispersed solution had 25.0% strength monomer. The particle size of the polymer was not more than 10µm while the viscosity of the dispersed solution was 740 mPa · s. Molar ratio between monomers: acryloyl hydroxyethyl trimethyl ammonium chloride/acrylamide was equal to 50/50. This product obtained here is referred to an experimental product-2. The result is shown in Table 2.

### - Synthesis Example 5 -

Into a five-necked separable flask equipped with stirrer, thermometer, reflux condenser and nitrogen intake pipe were poured 59.0g of a 50% acrylamide aqueous solution and 25.0g of a 60% strength acrylic acid aqueous solution. Then, 23.8g of a 35% strength aqueous sodium hydroxide was introduced to neutralize the equivalent weight of acrylic acid. Further, 31.3g (corresponding to 5.0% relative to monomer) of acryloyl hydroxyethyl trimethyl ammonium chloride polymer (20% strength aqueous solution, molecular weight of eighty of thousands), 142.1g of ion-exchanged water, 115.0g of ammonium sulfate and 100.6g of a 80% aqueous acryloyl hydroxyethyl trimethyl ammonium chloride were introduced into the mixture and dissolved completely. The mixture, after replacement with nitrogen over a half hour at the interior temperature of 33 to 35 °C, was added with an initiator of 4.4g of a 1% strength aqueous solution (corresponding to 0.035% relative to monomer) of 2,2'-azobis[2-(5-methyl-2-imidazoline-2-il)propane] dichloride hydride to cause polymerization. 2.2g of the same initiator as stated earlier was added after the elapse of eight hours since the polymerization began. Afterward the polymerization was made continued over additional ten hours. The resultant dispersed solution had 25.0% strength monomer. The particle size of the polymer was in the range of from 2 to 20 µm while the viscosity of the dispersed solution was 480mPa · s. Molar ratio among monomers: acryloyl hydroxyethyl trimethyl ammonium chloride/acrylic acid/acrylamide was equal to 40/20/40. This product obtained here is referred to an experimental product-3. The result is shown in Table 2.

**Table 2**

| Synthsis Example No. | Specimens | DMQ | AAM | AAC | Viscosity of Dispersion | Molecular Weight (× 10000) |
|---|---|---|---|---|---|---|
| 3 | Experimental Product-1 | | 70 | 30 | 200 | 900 |
| 4 | Experimental Product-2 | 50 | 50 | | 740 | 750 |
| 5 | Experimental Product-3 | 40 | 40 | 20 | 480 | 700 |
| DMQ: acryloyl hydroxyethyl trimethyl ammonium chloride | | | | | | |
| AAM: acrylamide | | | | | | |
| AAC: acrylic acid | | | | | | |
| Viscosity of dispersed solution: mPa · s | | | | | | |

### - Use Examples 6 to 10 -

200mL of sludge of waste water, which had pH; 6.21 and total suspended solid; 8.250mg/mL, was taken from the food processing site into a beaker and added with 100ppm of experimental product-1 to product-5, relative to sludge solids. The mixture was poured into another beaker. After agitation was repeated 10 times, the growth of floc could be followed visually. The filtration was carried out through a filtering cloth T-1179L (made of nylon) with an amount of filtrate being measured 10 seconds later, 20 seconds later and 30 seconds later. The solid filter cake was subjected to dewatering under pressure of 2Kg/m² for one minute. Moisture content of the filter cake was measured after drying over twenty hours at 105 °C. The results are shown in Table 3.

### - Comparisons 1 to 3 -

In accordance with the same procedure explained earlier in the examples 6 to 10, comparisons were carried out of modified polyethyleneimine (having the molecular weight of a hundred of thousands and the cation equivalent of 11.3meq/g), called "comparison-1", which was derived from epichlorohydrin, of polyethyleneimine (having the molecular weight of seventy of thousands and the cation equivalent of 18.6 meq/g) intact prior to reaction, called "comparison-2" and of neutralized polyethyleneimine (having the molecular weight of seventy of thousands and the cation equivalent of 18.6meq/g), called "comparison-3". The results are shown in Table 3.

**Table 3**

| Example No. | Specimens | Floc Size (mm) | Filtrate (ml) | | | Moisture in Cake |
|---|---|---|---|---|---|---|
| | | | 10sec | 20sec | 30sec | |
| 6 | Experimental Product-1 | 3 | 126 | 138 | 141 | 78.3 |
| 7 | Experimental Product-2 | 3 | 120 | 133 | 137 | 79.0 |
| 8 | Experimental Product-3 | 2.5 | 117 | 130 | 134 | 79.4 |
| 9 | Experimental Product-4 | 3 | 125 | 140 | 142 | 78.1 |
| 10 | Experimental Product-5 | 3 | 121 | 140 | 143 | 78.6 |

| Comparison No. | | | | | | |
|---|---|---|---|---|---|---|
| 1 | Comparison-1 | 2 | 108 | 126 | 134 | 80.5 |
| 2 | Comparison-2 | 1.5 | 95 | 116 | 130 | 82.7 |
| 3 | Comparison-3 | 2 | 90 | 110 | 129 | 83.2 |
| Moisture content: % by mass | | | | | | |
| Amount of coagulant added: ppm relative to solids in sludge | | | | | | |
| Amount of filtrate: mL | | | | | | |

### - Use Examples 11 to 15 -

Fibre stock (pH; 6.5, total suspended solid; 2.56%, ash content, 0.13%) for core paper of corrugated paper was diluted down to 0.3% by weight for freeness test. The resultant 0.3% by weight dispersed solution was poured in a 1000mL messcylinder and added with 600ppm of experimental product-1 to product-5, respectively, relative to the dispersed solution. The mixture solution was stirred as the messcylinder flipped over five times, followed by poured into a CSF tester to measure amount of filtrate. Thereafter, pulp remaining on a mesh of the CSF tester was charged into a centrifugal tube, which was made double-bottomed with a filtering medium of 100mesh. The pulp was dewatered over five minutes with using a digital centrifugal dryer of 3000rpm (on the assumption of a dehydrating couch roll in the paper machine). The amount of pulp was measured just after centrifugal dewatering and after a further drying over 20 hours at 105 °C to determine moisture content. The results are shown in Table 4.

### - Comparisons 4 to 6 -

In accordance with the same procedure explained earlier in the examples 11 to 15, comparisons 4 to 6 were carried out with using comparison-2: polyethyleneimine (having the molecular weight of seventy of thousands and the cation equivalent of 18.6meq/g) intact prior to reaction, comparison-3: neutralized polyethyleneimine (having the molecular weight of seventy of thousands and the cation equivalent of 18.6meq/g), and comparison-4: agent of polyethyleneimines (having the molecular weight of eighty of thousands and the cation equivalent of 8.3meq/g) to improve freeness. The results are shown in Table 4.

**Table 4**

| Example No. | Specimens | Amount of Filtrate (ml) | Moisture Content (%) |
|---|---|---|---|
| 11 | Experimental Product-1 | 490 | 66.0 |
| 12 | Experimental Product-2 | 490 | 66.1 |
| 13 | Experimental Product-3 | 485 | 66.0 |
| 14 | Experimental Product-4 | 480 | 66.2 |
| 15 | Experimental Procuct-5 | 480 | 66.7 |

| Comparison No. | | | |
|---|---|---|---|
| 4 | Comparison-2 | 457 | 67.9 |
| 5 | Comparison-3 | 444 | 67.5 |
| 6 | Comparison-4 | 455 | 67.9 |

### - Use Examples 16 to 20 -

Fibre stock (pH; 6.85, turbidity; 950FAU, total suspended solid; 3.50%, ash content, 0.11%; amount of cation required, 0.67 meq/L; ζ-potential, 13mV) for medium-quality paper composed of thermo-mechanical pulp, magazine waste paper and LBKP was poured by a 100mL. The fibre stock samples, after set in the stirrer, were added with 250ppm and 500ppm, respectively, of specimens-1 to specimens-5, relative to the total suspended solid, and stirred over 60 seconds at 200rpm. Then, the stock samples were added with 0.2% of commercially available amphoteric agent to enhance the paper strength, followed by stirred for a half hour at 200rpm. Thereafter, the fibre stocks were poured onto Whatman's filter paper No.41 (90nm). Amount of cationic demand was measured with Muetek's PCD-03 type while turbidity was measured with the turbidimeter of HACH, DE2000P type. The results are shown in Table 5.

### - Comparisons 7 to 8 -

For comparison, the same tests explained earlier in the examples 16 to 20 were carried out with using comparison-A: polycondensation cation (having the molecular weight of 16500 and the cation equivalent of 7.31meq/g) of dimethylamine/epichlorohydrin/polyamine, and comparison-B: hydrochloride acid-neutralized polymer of methacrylic dimethylaminoethyl (having the molecular weight of three hundreds of thousands and the cation equivalent of 5.22meq/g). The results are shown in Table 5.

**Table 5**

| Example No. | Specimens | Amount of Cationic Demand in Filtrate | | Turbidity in Filtrate | |
|---|---|---|---|---|---|
| | | 250ppm | 500ppm | 250ppm | 500ppm |
| 16 | Experimental Product-1 | 0.025 | 0.018 | 300 | 230 |
| 17 | Experimental Product-2 | 0.020 | 0.014 | 230 | 180 |
| 18 | Experimental Product-3 | 0.019 | 0.014 | 250 | 195 |
| 19 | Experimental Product-4 | 0.018 | 0.013 | 220 | 170 |
| 20 | Experimental Product-5 | 0.022 | 0.014 | 270 | 200 |

| Comparison No. | | | | | |
|---|---|---|---|---|---|
| 7 | Comparison-A | 0.042 | 0.035 | 470 | 350 |
| 8 | Comparison-B | 0.036 | 0.027 | 360 | 300 |
| Amount of cationic demand: meq/g | | | | | |
| Turbidity in filtrate: FAU | | | | | |

### - Use Examples 21 to 26 -

Fibre stock (LBKP/DIP/TMP=10/60/30, pH; 7.1, total suspended solid; 2.40%, ash content, 0.30%) for medium-quality paper was diluted with drinking water to 0.9% by weight strength fibre solution, the yield of which was measured with Britt dynamic jar tester. The dilute fibre stock solution was added first with a 1.5% liquid alum and then with 0.04% of modified polyethyleneimine prepared by either synthesis example 4 or synthesis example 5: either experimental product-4 or experimental product-5, relative to the fibre stock. Then, 0.015% of water-soluble polymer of experimental product-6 to product-8 prepared by synthesis examples 3 to 5, relative to fibre stock, is added. The order in which agents were added was the sequence recited earlier, and the additions of agents were carried out at every fifteen interval under the following test-conditions while beginning agitation. After the overall addition of agents, pH was 5.60. White water was discharged over ten seconds after the elapse of thirty seconds. White water collected for thirty seconds was used to measure the overall yield under the following conditions. The fibre stock solution was filtered on a woven screen of wire 125P (corresponding to 200mesh) while stirred with revolution of 1000rpm. The overall yield (SS concentration) was measured with ADVANTEC, No. 2. Moreover, a filter paper was dried, followed by burned to measure ash content to find yield of inorganic materials. The results are shown in Table 6.

### - Comparisons 9 to 14 -

For comparisons, raw polyethyleneimine: P-1050 according to the synthesis example 4, referred to comparison-2, and methacrylic dimethylaminoethyl polymer (having the molecular weight of six hundreds of thousands), referred to comparison-5, were used instead of the modified polyethyleneimine, while water-soluble polymer was selected from experimental product-6 to product-8 obtained according to the synthesis examples 3 to 5. The tests were carried out as explained earlier in the examples 21 to 26. The results are shown in Table 6.

**Table 6**

| Example No. | Modified PEI | | Water-Soluble Polymer | | Overall Yield | Yield of Inorganic Materials |
|---|---|---|---|---|---|---|
| 21 | Experimental Product-4 | 0.04 | Experimental Product-6 | 0.015 | 63.2 | 50.1 |
| 22 | Experimental Product-4 | 0.04 | Experimental Product-7 | 0.015 | 66.0 | 57.5 |
| 23 | Experimental Product-4 | 0.04 | Experimental Product-8 | 0.015 | 67.3 | 60.3 |
| 24 | Experimental Product-5 | 0.04 | Experimental Product-6 | 0.015 | 62.0 | 48.5 |
| 25 | Experimental Product-5 | 0.04 | Experimental Product-7 | 0.015 | 64.6 | 51.4 |
| 26 | Experimental Product-5 | 0.04 | Experimental Product-8 | 0.015 | 66.5 | 58.6 |

| Comparison No. | | | | | | |
|---|---|---|---|---|---|---|
| 9 | Comparison-2 | 0.04 | Experimental Product-6 | 0.015 | 53.8 | 40.2 |
| 10 | Comparison-2 | 0.04 | Experimental Product-7 | 0.015 | 57.3 | 42.4 |
| 11 | Comparison-2 | 0.04 | Experimental Product-8 | 0.015 | 58.0 | 42.5 |
| 12 | Comparison-5 | 0.04 | Experimental Product-6 | 0.015 | 56.5 | 41.0 |
| 13 | Comparison-5 | 0.04 | Experimental Product-7 | 0.015 | 58.7 | 44.6 |
| 14 | Comparison-5 | 0.04 | Experimental Product-8 | 0.015 | 58.5 | 45.5 |
| Overall yield: % by mass | | | | | | |
| Yield of inorganic materials: % by mass | | | | | | |

### Industrial Applicability

The modified polyalkyleneimines of the present invention can be prepared by reaction of polyalkyleneimines or mixtures thereof with polyamines with polycationic substance having a specific structure. Moreover, the modified polyalkyleneimines may serve much useful functions when used for a diversity of agents for dewatering sludge, improving freeness, pretreatment of paper stock, and increasing yield, ensuring much worth in industrial applicability.

## Claims

1. Modified polyalkyleneimine having a repeating unit of chemical structure having any one of the general formula (1) and (2) 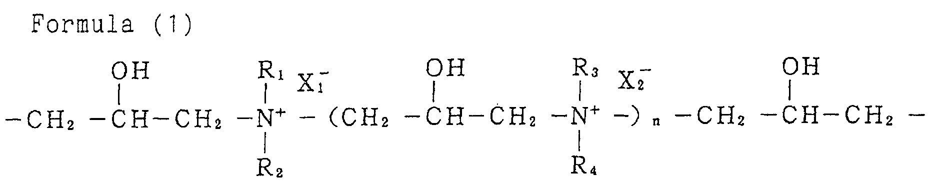 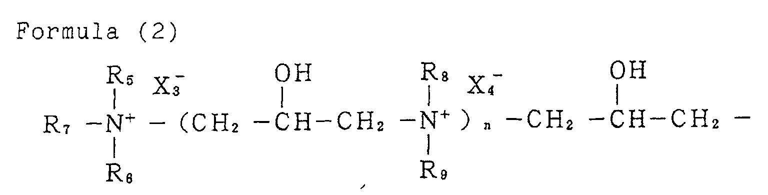 in both the formula (1) and (2), n denotes an integer of 0 to 20; R₁ to R₉ represent any one selected from hydrogen, alkyl groups, hydroxyalkyl groups and bensyl groups having carbon atoms of 1 to 3; and X₁ to X₄ are a negative ion.

2. Modified polyalkyleneimine defined in claim 1, which is prepared by reaction of any one of polyalkyleneimines and a mixture thereof with polyamines with any one of polycationic substances of formula (3) and (4) 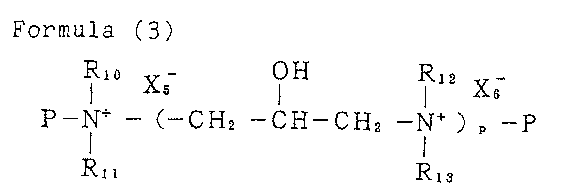 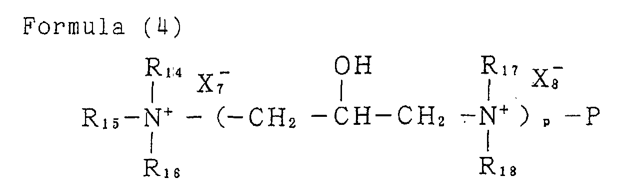 in both the formula (3) and (4), P denotes epoxy groups or halohydrin groups; p is an integer of 0 to 20; R₁₀ to R₁₈ are selected from hydrogen, alkyl, hydroxyl, and benzyl groups having carbon atoms of 1 to 3; and X₅ to X₈ are a negative ion.

3. Modified polyalkyleneimine defined by any one of claims 1 and 2, which is prepared by cross-linking with the polycationic substance of the general formula (3).

4. Modified polyalkyleneimine defined by any one of claims 1 to 3, in which the polycationic substance of the general formula (3) and/or (4) is a polymer product made by condensation polymerization of epihalohydrin with more than one amines selected from ammonia, aliphatic primary amines, aliphatic secondary amines, and aliphatic tertiary amines.

5. Modified polyalkyleneimine defined by any one of claims 1 to 4, in which the polycationic substance of the general formula (3) and/or (4) is a polymer product made by condensation polymerization of A mol of epihalohydrin with B mol of more than one amines selected from ammonia, aliphatic primary amines, aliphatic secondary amines, and aliphatic tertiary amines, wherein the reaction is carried out under such condition that A/B is kept within a range of from 0.25 to 1.2.

6. Modified polyalkyleneimine defined by any one of claims 1 to 5, in which any one of the polyalkyleneimines and the mixture thereof with the polyamines contains C mol of amino groups while the polycationic substance of the general formula (3) and/or (4) contains D mol of halohydrin groups and/or epoxy groups, wherein the reaction is carried out under a condition C/D is kept in a range of from 5 to 300mol%.

7. Modified polyalkyleneimine defined by any one of claims 1 to 6, in which the polyalkyleneimine is polyethyleneimine.

8. A process for treatment by flocculation, wherein the modified polyalkyleneimine recited in any one of claims 1 to 7 is added to microbiological sludge or a variety of waste waters.

9. A process for improving freeness, wherein the modified polyalkyleneimines recited in any one of claims 1 to 7 is added to paper stock preparatory to papermaking.

10. A process for pretreatment of paper stock wherein the modified polyalkyleneimine recited in any one of claims 1 to 7 is added to paper stock preparatory to papermaking.

11. A process for papermaking defined by claim 10, wherein the paper stock is mainly composed of mechanical pulp and/or waste paper.

12. A process for papermaking, wherein the modified polyalkyleneimines recited in any one of claims 1 to 7 are added, in combination with at least one water-soluble polymer having any one of cationic, amphoteric and anionic properties to the paper stock prior to papermaking to help improve freeness and/or yield.

13. A process for papermaking defined by claim 12, wherein the water-soluble polymer is composed of fine particles of high polymer of not more than 100µm in grain size, which is prepared by dispersion polymerization in a salt solution in the presence of highly molecular dispersant soluble in the salt solution of a monomer mixture containing 0 to 97mol% of nonionic monomers and 3 to 100mol% of anionic monomers of the general formula (5) 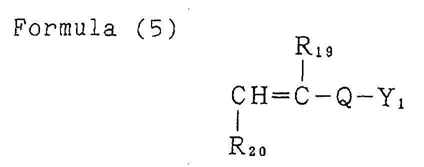 in which R₁₉ denotes hydrogen, methyl groups or carboxymethyl groups; Q is selected from the group consisting of SO₃, C₆H₄SO₃, CONHC(CH₃)₂CH₂SO₃, C₆H₄COO and COO; R₂₀ is hydrogen or COOY₂; and Y₁ or Y₂ is hydrogen or positive ion.

14. A process for papermaking defined by claim 12, wherein the water-soluble polymer is composed of fine particles of high polymer of not more than 100µm in grain size, which is prepared by dispersion polymerization in a salt solution in the presence of highly molecular dispersant soluble in the salt solution of a monomer mixture containing 0 to 95mol% of nonionic monomers, 0 to 50mol% of the anionic monomers of the general formula (5) recited above, and 5 to 100mol% of cationic monomers of the general formula (6) and/or (7) 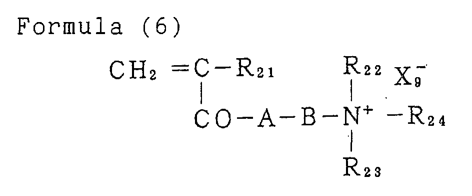 in which R₂₁ denotes hydrogen or methyl groups; R₂₂ and R₂₃ represent alkyl groups or alkoxyl groups having carbon atoms of 1 to 3; R₂₄ is selected from hydrogen, alkyl, alkoxyl, benzyl groups having carbon atoms of 1 to 3, whether the same or different sort; A denotes oxygen or NH; B represents alkylene groups or alkoxylene groups having the carbon atoms of 2 to 4, and X₉ is a negative ion, 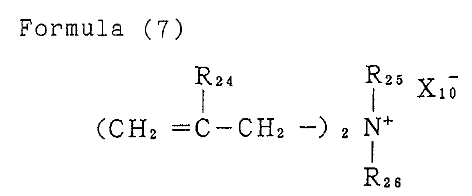 in which R₂₄ denotes hydrogen or methyl groups; R₂₅ and R₂₆ represent any one selected from alkyl, alkoxyl and benzyl groups having carbon atoms of 1 to 3; and X₁₀ is a negative ion.
